# EUROPEAN PATENT SPECIFICATION

(11) **EP 3 501 960 B1**
(45) Date of publication and mention of the grant of the patent: **10.11.2021**
(21) Application number: 18209745.1
(22) Date of filing: 03.12.2018
(51) Int. Cl.: B62M 3/00, F16C 33/78, B60B 27/00

(54) **BICYCLE BOTTOM BRACKET**
FAHRRADTRETLAGER
PÉDALIER DE BICYCLETTE

(30) Priority: 22.12.2017 IT 201700149140
(43) Date of publication of application: 26.06.2019
(73) Proprietor: Campagnolo S.r.l., 36100 Vicenza (VI) (IT)
(72) Inventor: MARCHI, Marco, I-40043 Marzabotto (BO) (IT)
(74) Representative: Porta & Consulenti Associati S.p.A.

(56) References cited:
- WO-A1-2008/009301
- DE-U1-202015 103 004
- DE-U1-202015 103 004
- US-A- 4 865 469
- US-A- 6 056 293
- US-A1- 2005 089 254
- US-A1- 2007 095 164
- US-A1- 2007 241 515
- US-A1- 2009 058 011
- US-A1- 2010 247 014
- US-A1- 2015 117 805
- US-B1- 8 267 417

## Description

The present invention relates to a bicycle bottom bracket.

As known, a bicycle bottom bracket comprises a pin with the opposite ends of which a left pedal crank and a right pedal crank can be or are associated. The bottom bracket is mounted on the bicycle housing the pin in a housing suitably provided in the frame of the bicycle. The rotation of the bottom bracket with respect to the housing is achieved by inserting a pair of rolling bearings on the pin. The pin is held in position in the housing by caps that are coupled with the axial ends of the housing.

In particular, in order to allow the pin to rotate with respect to the housing and to the caps, the rolling bearings are arranged between the caps and the pin. Furthermore, in order to avoid movements of the pin in the axial direction, each rolling bearing is held in position by respective shoulders.

The rolling bearings at least in part face the respective pedal cranks and therefore are partially exposed to external agents such as dust, water and mud that, during normal use of the bicycle hit the area of the pedal cranks and of the housing of the bottom bracket.

In order to prevent such external agents from being able to reach the rolling bearings and compromise the correct operation thereof, solutions have been proposed in which between each cap and the pin, on the side facing towards the pedal crank, a labyrinth is provided that creates turns that oppose the infiltration of liquids and mud.

Such a labyrinth is usually made by rings fixedly connected to the pin alternating with rings fixedly connected to the cap, so as to allow the rotation of the pin with respect to the cap but avoid a direct exposure of the rolling bearing to the outside.

Furthermore, in order to protect the balls of the bearing from infiltrations of water that cross the aforementioned labyrinth, it has been proposed to insert an annular gasket fixedly connected to the cap and sliding on the race constrained to the pin, as for example described in document US 8393794.

The Applicant has noted that the aforementioned provisions may not be proper solutions, namely they may not effectively protect the rolling bearings from external agents, in particular from water.

The Applicant has indeed observed that, for example in the case of washing of the bicycle with pressurized water, the water easily crosses the aforementioned labyrinth and reaches the aforementioned annular gasket, sitting in front of the bearing itself at the gasket with possible leaking through the gasket and towards the bearing.

In some solutions, it has been proposed to increase the number of gaskets to ensure a constant and effective fluid-tight seal also in the case in which dirt and liquids sit in front of the rolling bearing.

The Applicant has however noted that in these cases the energy dissipated by friction due to the sliding of the gaskets on the central pin increases, with consequent decrease in efficiency of the bicycle.

Document US 2007/0296155 describes an axially outer auxiliary ring with respect to the bearing, radially arranged between the cap and the pin, fixedly connected with the pin and adapted to create a labyrinth between the outside and the bearing. The auxiliary ring comprises a radially-extending wall facing the bearing and an axially-extending wall facing towards the cap and joined to the radially-extending wall. Axially outside of the bearing a gasket is provided that comprises a lip in contact with the radially-extending wall of the auxiliary ring and a portion facing the axially-extending wall of the auxiliary ring. Between the gasket and the axially-extending wall of the auxiliary ring lubricating grease is inserted. When an external pressure is applied on the gasket, for example during the washing of the bicycle with pressurized water, the lip of the gasket exerts greater pressure against the radially-extending wall of the auxiliary ring, increasing the fluid-tight seal and preventing water from reaching the bearing.

The Applicant has noted that the solution proposed by US 2007/0296155 also does not prevent pressurized water from sitting in front of the gasket, held by the auxiliary ring and leaking, over time, towards the bearing.

The Applicant has further noted that the presence of clearance recovery systems of the bottom bracket, which are usually arranged between a rolling bearing and the respective pedal crank, creates substantial difficulties in making and installing the aforementioned auxiliary ring that is active precisely at the area in which the clearance recovery system is usually present.

The Applicant has also noted that the mounting and maintenance of the systems for protecting the rolling bearing summarily described above are very complicated also due to the presence of a large number of components to be installed in the correct position. The document US 4 865 469 A discloses a bottom bracket for bicycles in accordance with the preamble of claim 1.

In the rest of the present description and in the following claims, the terms "radial" and "axial" are used with reference to directions respectively perpendicular and parallel to (or coincident with) a rotation axis of the shaft of the bottom bracket.

The expressions "radially inner" and "radially outer" respectively indicate positioning closer to or further from the aforementioned rotation axis.

The expressions "axially inner" and "axially outer" respectively indicate positioning closer to and further from a reference plane perpendicular to the rotation axis of the shaft of the bottom bracket, passing through a median section of the bottom bracket.

The present invention relates to a bottom bracket for bicycles comprising:
- a central pin having a longitudinal axis extending along a predetermined direction and comprising a first axial end portion and a second axial end portion;
- a first adapter radially outside of, and crossed by, said central pin and configured to be associated with a first end of a box for housing the bottom bracket in a frame of a bicycle;
- a first rolling bearing radially arranged between said central pin and said first adapter;
- a sealing gasket arranged in axially outer position with respect to said first rolling bearing and radially outer with respect to said central pin to insulate said first rolling bearing in a fluid-tight manner from the outside, said sealing gasket being directly exposed to the outside and being elastically deformable between an undeformed condition and a deformed condition;
   wherein said sealing gasket comprises a first axially outer end provided with a first lip and a second lip axially more inner with respect to the first lip, said first lip being in constant fluid-tight relationship with said central pin;
   wherein when the sealing gasket passes from the undeformed condition to the deformed condition, said second lip moves from a more outer radial position, in which the second lip is radially outside of the first lip and in which the second lip does not exert a fluid-tight seal on said central pin, to a more inner radial position, in which the second lip is in fluid-tight relationship with said central pin.

The first lip of the sealing gasket prevents dust, water or mud from reaching the rolling bearing compromising the functionality thereof. In particular, the first lip, being in constant fluid-tight relationship with the central pin and being directly exposed to the outside, prevents dust, water or mud from being able to reach the rolling bearing or sitting in front of the rolling bearing.

In the present description and in the following claims, the term "directly exposed to the outside" referring to the sealing gasket is meant to indicate that axially outside of the sealing gasket no bodies or rings are provided having radial extensions such as to create, in combination with the central pin, with an adapter or with other components of the bottom bracket or of the bicycle, turns or labyrinths for protecting the gasket itself.

In the condition of normal use of the bicycle, the sealing gasket is in the undeformed condition, since on the sealing gasket no forces act such as to deform the gasket itself. The second lip of the sealing gasket is substantially inactive in this condition, since it does not exert a fluid-tight seal on the central pin, entrusting such a sealing function to the first lip.

When the bicycle is subjected to washing with pressurized water or when in particular conditions of use a large amount of water or mud reaches the bottom bracket (for example while crossing shallow water or during a particularly intense rain shower), a pressure is exerted on the sealing gasket that elastically deforms the same, moving the second lip in a radially inner direction towards the central pin so that the second lip is also in fluid-tight relationship with the central pin. This ensures a greater fluid-tight seal against the possible infiltration of liquid towards the rolling bearing, protecting it also in such extreme conditions.

The activation of the second lip only following an elastic deformation of the sealing gasket also ensures that during normal use of the bicycle only the first lip is in sliding relationship on the central pin, minimizing the friction between sealing gasket and central pin. This allows better pedaling efficiency, since the second lip does not dissipate energy by friction during normal use of the bicycle.

Preferably, said second lip is arranged at the same radial height as the first lip when the sealing gasket is in the deformed condition.

Preferably, said sealing gasket comprises a joining portion between said first and second lip; said joining portion being radially more outer with respect to the first and to the second lip when the gasket is in the deformed condition. The joining portion is never in fluid-tight relationship with the central pin, even when the sealing gasket is in the deformed condition. The joining portion axially separates the first lip from the second lip.

Preferably, said sealing gasket comprises a support portion configured to make said sealing gasket fixedly connected to said first adapter. The support portion makes it possible to keep the sealing gasket in the desired position and to position the first and the second lip at the central pin.

Preferably, said sealing gasket comprises an activation surface configured to transmit a deformation pressure to said first and second lip; said activation surface connecting said first lip to said support portion. The activation surface is directly exposed to the outside and is subjected to forces that from the outside are directed towards the rolling bearing. The activation surface thus operates as transducer allowing the pressure exerted on the sealing gasket to deform the sealing gasket itself.

Preferably, said activation surface is an outer surface of the sealing gasket arranged on the opposite side with respect to said rolling bearing; said activation surface forming an angle comprised between 5° and 90° with respect to a radial reference plane. The greater the angle between the activation surface and the radial reference plane, the greater the axial space occupied by the sealing gasket. The smaller the angle between the activation surface and the radial reference plane, the smaller the axial space occupied by the sealing gasket.

The Applicant has found that for angles smaller than about 5°, the sealing gasket would have dimensions in the axial direction that are too limited to ensure a correct fluid-tight seal of the first lip and, in the deformed condition, of the second lip.

Preferably, said first lip comprises a substantially rounded outer surface. Such a rounded surface makes it possible to obtain a contact surface of the first lip that, substantially, extends along a circumference.

Preferably, said second lip comprises a substantially flat radially inner end surface. The radially inner end surface of the second lip is the surface intended to create a fluid-tight seal when the sealing gasket is in the deformed condition.

Preferably, an annular support body is provided to which said support portion of the sealing gasket is constrained; said sealing gasket being made of softer material with respect to said annular support body.

The annular support body defines a rigid body preferably comoulded with the sealing gasket. The portion of sealing gasket coupled with the annular support body does not elastically deform. Therefore, the first and the second lip of the sealing gasket are not engaged by the annular support body.

Preferably, said annular support body is constrained on a radially outer surface of the first adapter.

Preferably, said first rolling bearing comprises a first race coupled with said central pin and a second race coupled with a radially inner surface of the first adapter.

Preferably, said annular support body is constrained to a radially outer surface of said second race.

Preferably, an adjustment nut is provided, rotating as a unit with said central pin, axially outer with respect to said first bearing and in axial abutment against it; said first lip of the sealing gasket being in sliding contact on said adjustment nut. The adjustment nut rotates as a unit with the central pin and allows the rolling bearings to be locked in a desired axial position. The sealing gasket can be directly active on the adjustment nut, since there are no axially outer rings with respect to the rolling bearings that obstruct the position of the adjustment nut and/or of the sealing gasket.

Preferably, no axially outer single rings or groups of rings with respect to the first bearing are provided that make labyrinths and/or turns.

Further features and advantages of the present invention will become clear from the following detailed description of some preferred embodiments thereof, made with reference to the attached drawings, given for indicating and not limiting purposes. In such drawings:
- figure 1 is a longitudinal section view of a bicycle bottom bracket in accordance with the present invention;
- figure 2 is an enlarged view of some details of the bottom bracket of figure 1;
- figure 3 is an enlarged view of the details of figure 2 in a first variant embodiment;
- figure 4 is an enlarged view of the details of figure 2 in a second variant embodiment;
- figure 5 shows a detail of the bottom bracket of figure 1 in a first operative condition; and
- figure 6 shows the detail of the bottom bracket of figure 5 in a second operative condition.

In the attached figures, reference numeral 1 indicates a bicycle bottom bracket in accordance with the present invention.

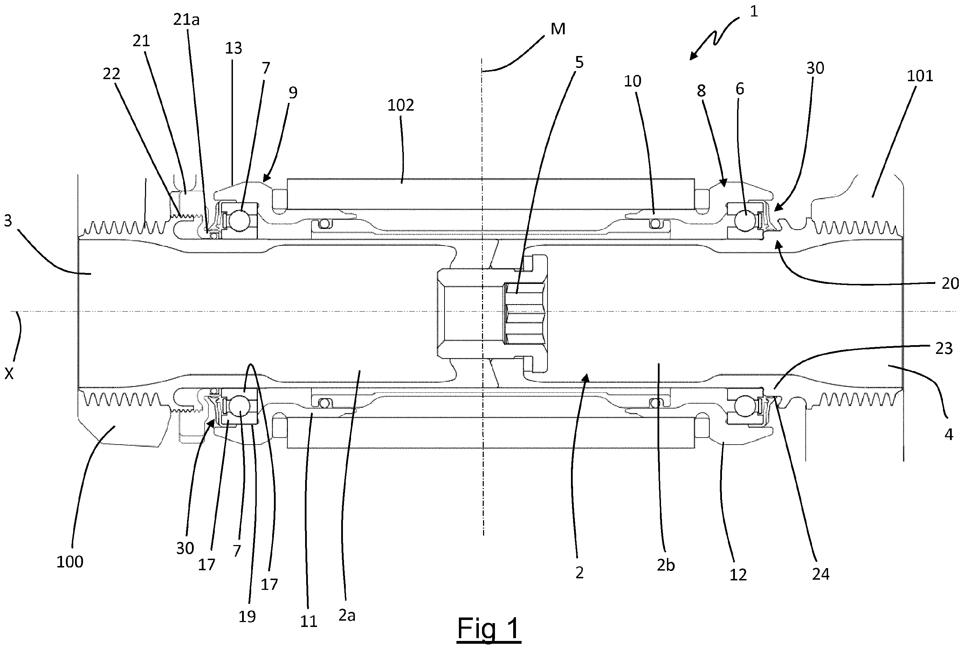

The bottom bracket 1 comprises a central pin 2 having a longitudinal axis X extending along an axial direction. The longitudinal axis X coincides with a rotation axis of the central pin 2. The central pin 2 comprises opposite axial end portions 3 and 4, left and right respectively, with which a left pedal crank 100 and a right pedal crank 101 (only partially indicated in figure 1), can or preferably are respectively associated.

In the preferred embodiment of the invention, the central pin 2 is made up of a first half-part 2a and a second half-part 2b joined to one another, at a middle plane M of the bottom bracket 1, by a suitable bolt 5. The central pin 2 is substantially cylindrical and internally hollow.

The central pin 2 is supported in rotation in a housing box 102 suitably provided in the frame of the bicycle through the interposition of a first rolling bearing 6 and of a second rolling bearing 7 suitably inserted in radially outer position on the pin 2. The housing box 102 is substantially cylinder-shaped and extends along a longitudinal axis intended to coincide with the axis X of the pin 2 when the pin is housed inside the housing box 102.

In the specific embodiment illustrated in the attached figures, the first 6 and the second rolling bearing 7 are ball bearings, it is however possible to use other types of bearings adapted for ensuring a relative rotary motion between pin 2 and housing box 102, like for example roller bearings.

The first 6 and the second bearing 7 are respectively inserted in a first adapter 8 and in a second adapter 9. The first 8 and the second adapter 9 are constrained inside the housing box 102 at opposite free end portions of the housing box 102.

The mechanical constraint between the first 8 and the second adapter 9 and the housing box 102 can be obtained by providing the first 8 and the second adapter 9 with a threaded outer surface and, at the same time, by threading the inner surface of the housing box 102 at the free ends thereof.

Alternatively, the first 8 and the second adapter 9 can be inserted by interference in the free ends of the housing box 102 so as to make a "press fit" type coupling. In this case, such a coupling can be further reinforced by glues inserted between the first 8 and the second adapter 9 and the housing box 102.

In any case, the first 8 and the second adapter 9 comprise a respective portion 10, 11 inserted inside the housing box 102 and a respective axially outer portion 12,13 with respect to the housing box 102.

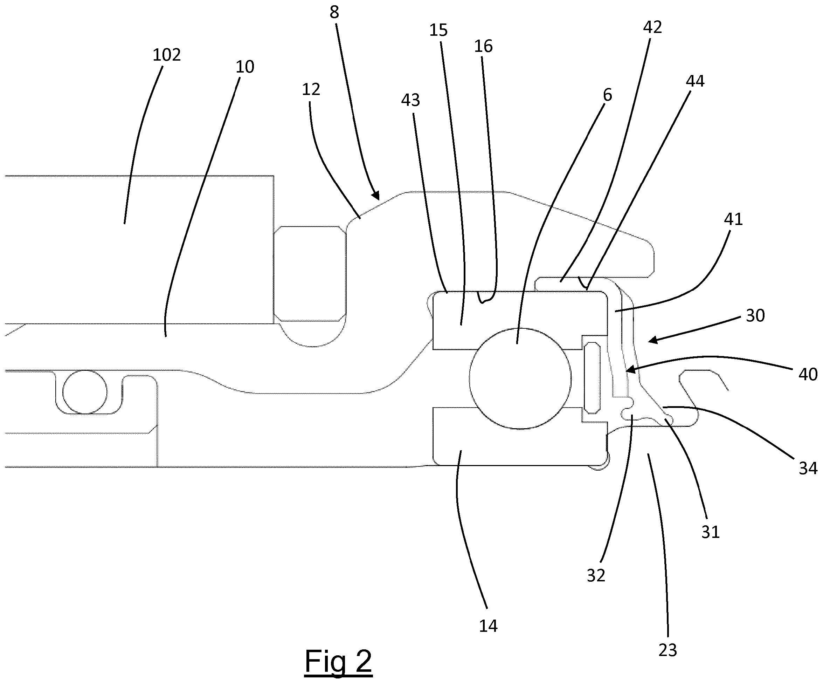

Figures 2, 3 and 4 show possible shapes of the adapters 8, 9 each of which is provided with the aforementioned respective axially outer portion 12, 13 with respect to the housing box 102 and with the respective portion 10, 11 inserted inside the housing box 102.

The first bearing 6 has a first race 14 coupled in radially outer position with respect to the pin 2 and a second race 15 coupled with a radially inner annular surface 16 of the first adapter 8. Similarly, the second bearing 7 has a first race 17 coupled in radially outer position with respect to the pin 2 and a second race 18 coupled with a radially inner annular surface 19 of the second adapter 9.

The bottom bracket 1 further comprises axial locking members 20 the function of which is to prevent axial movements of the pin 2 once installed.

The axial locking members 20 comprise, at the first 6 or second bearing 7, an annular shoulder 23, axially outer with respect to the bearing. The annular shoulder 23 is preferably in one piece with the pin 2 and is in axial abutment against the first race 14, 17 of the first 6 or second bearing 7. The annular shoulder 23 comprises a radially outer surface 24 facing towards the corresponding adapter 8, 9.

The axial locking members 20 further comprise, at the bearing not engaged by the annular shoulder 23, an adjustment nut 21 (figure 1 shows the adjustment nut arranged at the second bearing 7) arranged axially outside of the bearing and in axial abutment against it. The adjustment nut 21 is inserted on the pin 2, rotates as a unit and is axially mobile with respect to the latter. The adjustment nut 21 is arranged at the bearing not engaged by the shoulder.

For this purpose, the adjustment nut 21 comprises a threaded radially inner surface 22 engaged on a threaded annular portion of the pin 2 (figure 1). By rotating the adjustment nut 21 in the clockwise and counter-clockwise direction with respect to the pin 2, the adjustment nut 21 translates axially in two opposite directions. When the adjustment nut 21 is not set in rotation with respect to the shaft 2, it is axially fixedly connected to the pin 2. The translation of the adjustment nut 21 has the purpose of ensuring that the adjustment nut 21 is in axial abutment against the first race 14, 17 of the respective bearing, axially locking the bearing. The adjustment nut 21 is used, in other words, to recover possible axial clearances between central pin 2 and housing box 102.

Axially outside of each bearing 6, 7 a respective sealing gasket 30 is provided which has the function of preventing dirt, mud and water from reaching the bearing, damaging it.

Each sealing gasket 30 comprises a first lip 31 and a second lip 32 axially separated from one another by a joining portion 33.

The first lip 31 is arranged at an axially outer and radially inner end 34 of the gasket 30, as better illustrated in figures 2, 3 and 4.

In the preferred embodiment of the invention, the first lip 31 has a rounded profile and is joined with continuity to the joining portion 33.

The first lip 31 is in contact, and thus exerts a fluid-tight seal, on a substantially flat surface oriented substantially axially, namely substantially parallel to the rotation axis X of the central pin 2.

In the preferred embodiment of the invention, the first lip 31 is in contact only with said substantially flat surface oriented substantially axially, not contacting any radially-extending surface.

In particular, the first lip 31 is in fluid-tight sealing relationship with the central pin 2, directly contacting the central pin 2 or, preferably, contacting the axial locking members 20, as illustrated in figures 2 to 4.

Preferably, the first lip 31 is in direct contact with the radially outer surface 24 of the annular shoulder 23 or with a radially outer surface 21a of the adjustment nut 21.

In any case, the first lip 31 contacts a surface that extends with radial continuity from the pin 2.

In other words, between the pin 2 and the first lip 31 there is no gap o channel that places the outside in fluid communication with the bearing 6, 7 on which the sealing gasket 30 is mounted.

On the radially opposite side with respect to the first lip 31, the sealing gasket 30 is in contact with the respective first 8 or second adapter 9, so that the sealing gasket 30 seals the bearing 6, 7 fluid-tight from the outside.

For this purpose, the sealing gasket 30 comprises a support portion 35 arranged radially externally with respect to the first lip 31 and fixedly connected to the adapter 8, 9.

The second lip 32 is arranged in more inner axial position with respect to the first lip 31 and preferably directly faces the respective bearing 6, 7.

The second lip 32 comprises a substantially flat radially inner end surface 36 joined, in axially outer direction, to the joining portion 33.

The joining portion 33 defines a recess in the radial direction between the first 31 and the second lip 32, so that the first 31 and the second lip 32 are radially more inner than the joining portion 33.

The second lip 32 is further connected, on the opposite side to the joining portion 33, with the support portion 35.

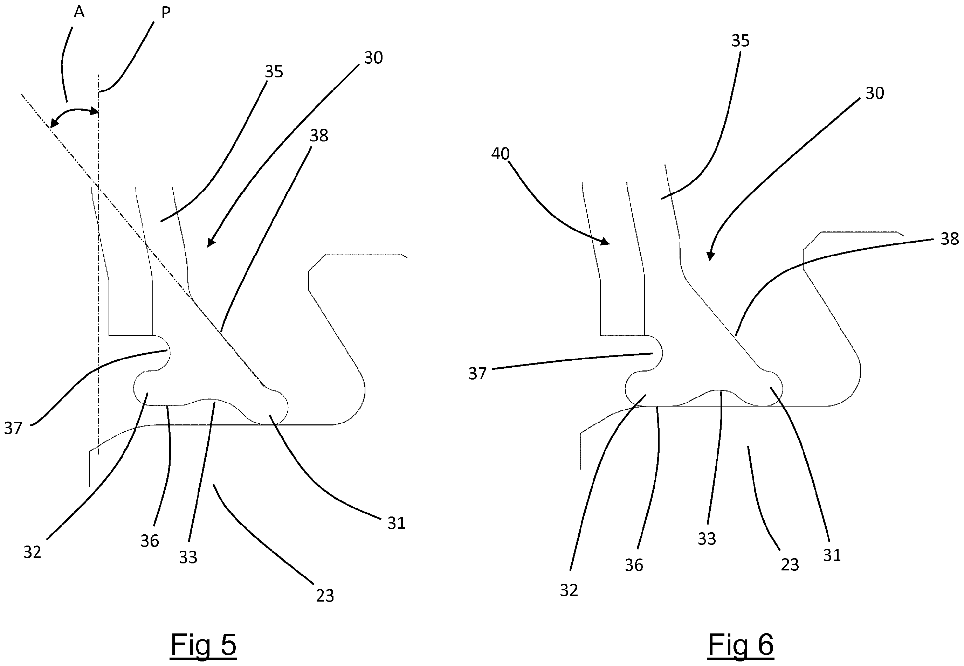

As better illustrated in figures 5 and 6, the second lip 32 is joined to the support portion 35 through a connection portion 37 having arched extension that defines a recess in axially outer direction.

The sealing gasket 30 is elastically deformable between an undeformed condition (illustrated in figure 5) and a deformed condition (illustrated in figure 6).

In both conditions, the first lip 31 is in sealed contact relationship with the pin 2.

The second lip 32 takes up different radial positions depending on whether the sealing gasket 30 is in the deformed condition or in the undeformed condition.

In particular, when the sealing gasket 30 is in the undeformed condition, the second lip 32 is radially distanced from an abutment surface preferably made by the same surface on which the first lip 31 is in contact, or made by another surface that extends with radial continuity from the pin 2.

When the sealing gasket 30 is in the deformed condition, the second lip 32 is in contact with such an abutment surface.

In other words, the first lip 31 is in constant fluid-tight relationship with the central pin 2, whereas the second lip 32 moves from an outermost radial position, in which it does not exert a fluid-tight seal on the central pin 2, to an innermost radial position, in which it is in fluid-tight relationship with the central pin 2.

The elastic deformation of the sealing gasket 30 is carried out by applying external loads, such as pressurized water and the like, to the sealing gasket 30 itself.

In order to allow the sealing gasket 30 to deform and to move the second lip 32 in radially inner direction, the sealing gasket comprises an activation surface 38 that connects the first lip 31 to the support portion 35.

The activation surface 38 is arranged on the opposite side to the respective bearing 6, 7 and directly faces the outside.

The activation surface 38 forms an angle A, with respect to a reference plane P perpendicular to the rotation axis X, comprised between 5° and 90°, preferably comprised between 20° and 60°, more preferably about 40°.

The greater the external pressure exerted on the activation surface 38, the greater the movement of the second lip 32 in the radially inner direction.

The connection portion 37 having arched extension, defining an axial recess, creates a reduction in the section of the sealing gasket 30 at the second lip 32, promoting the movement in the axial direction of the second lip 32.

In order to support the sealing gasket 30 during the elastic deformation and to allow a stable constraint of the sealing gasket 30 on the corresponding adapter 8, 9, an annular support body 40 is provided to which the support portion 35 of the sealing gasket 30 is constrained, as better illustrated in figures 2 to 4.

The annular support body 40 is made of less soft material than the sealing gasket 30. The latter is made of elastomer, whereas the annular support body 40 can be made of metal, like for example aluminum.

The annular support body 40 has a radial portion 41 and an axial portion 42 that is joined to the radial portion 41. The radial portion 41 extends for the entire radial extension of the support portion 35, stiffening it and not allowing any deformation of this portion of the sealing gasket 30. The radial portion 41 does not reach the activation surface 38 and the first 31 and the second lip 32, allowing these parts of the sealing gasket 30 to elastically deform.

In the preferred embodiment of the invention, the sealing gasket 30 is associated with the annular support body 40 on the opposite side with respect to the respective bearing 6, 7, namely axially outside of the annular support body 40.

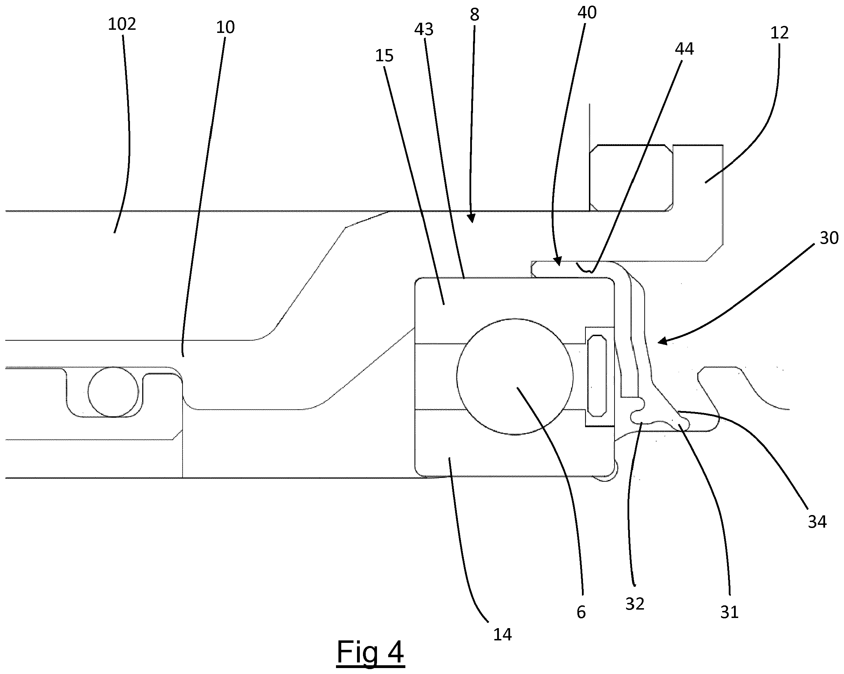

In the embodiment illustrated in figures 2 and 4, the annular support body 40 is constrained to a radially outer surface 43 of the second race 15.

In particular, the axial portion 42 of the annular support body 40 is inserted in an axial groove 44 formed at the radially inner surface 16 of the adapter 8 and held between the adapter 8 and the second race 15.

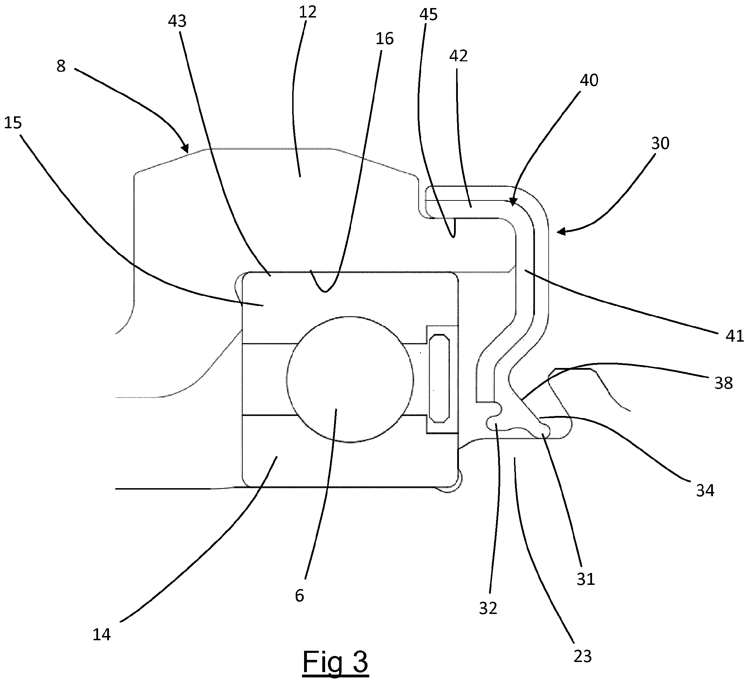

In the embodiment illustrated in figure 3, the annular support body 40 is constrained to a radially outer surface 45 of the adapter 8. In this embodiment, the axial portion 42 of the annular support body 40 partially overlaps the adapter 8.

In use, when the bicycle is in the normal operation conditions, the pressure on the sealing gasket 30 is minimum and in any case not capable of deforming it.

In this condition, only the first lip 31 is in sealed contact relationship on the central pin 2 preventing dust or liquids from filtering between the central pin 2 and the corresponding adapter 8, 9 and reaching the rolling bearing 6, 7.

When the bicycle is subjected to washing with pressurized water or in any case when liquid or mud reaches the sealing gasket 30 in substantial amounts, the latter elastically deforms and the second lip 32 moves in the radially inner direction also in sealed contact relationship on the central pin 2 and thus increasing the fluid-tight seal between sealing gasket 30 and central pin 2. In this way, the water and/or mud are further prevented from reaching the rolling bearing 6, 7.

Once the cause of the elastic deformation of the sealing gasket 30 has stopped, the latter goes back into the undeformed condition with only the first lip 31 in sealed contact relationship on the central pin 2.

It should be noted that the water or the mud that accumulates in front of the sealing gasket 30 can be easily evacuated since there are no bends or channels or labyrinths in axially outer position with respect to the sealing gasket 30.

Of course, those skilled in the art can bring numerous modifications and variants to the invention described above, in order to satisfy specific and contingent requirements, like for example providing an axially inner third lip with respect to the second lip to further increase the fluid-tight seal when the sealing gasket is in the deformed condition.

## Claims

1. Bottom bracket (1) for bicycles comprising:
- a central pin (2) having a longitudinal axis (X) extending along a predetermined direction and comprising a first axial end portion (3) and a second axial end portion (4);
- a first adapter (8) radially outer with respect to, and crossed by, said central pin (2) and configured to be associated with a first end of a box (102) for housing the bottom bracket in a frame of a bicycle;
- a first rolling bearing (6) radially arranged between said central pin (2) and said first adapter (8);
- a sealing gasket (30) arranged in axially outer position with respect to said first rolling bearing (6) and radially outer with respect to said central pin (2) to insulate said first rolling bearing (6) in a fluid-tight manner from the outside, said sealing gasket (30) being directly exposed to the outside and being elastically deformable between an undeformed condition and a deformed condition;
wherein said sealing gasket (30) comprises a first axially outer end (34) provided with a first lip (31) and said first lip (31) being in constant fluid-tight relationship with said central pin (2);
and **characterised in that** the sealing gasket (30) comprises a second lip (32) axially more inner with respect to the first lip (31) and when the sealing gasket (30) passes from the undeformed condition to the deformed condition, said second lip (32) moves from a more outer radial position, in which the second lip (32) is radially outside of the first lip (31) and in which the second lip (32) does not exert a fluid seal on said central pin (2), to a more inner radial position, in which the second lip (32) is in fluid-tight relationship with said central pin (2).

2. Bottom bracket (1) according to claim 1, wherein said second lip (32) is arranged at the same radial height as the first lip (31) when the sealing gasket (30) is in the deformed condition.

3. Bottom bracket (1) according to claim 1 or 2, wherein said sealing gasket (30) comprises a joining portion (33) between said first (31) and second lip (32); said joining portion (33) being radially more outer with respect to the first (31) and to the second lip (32) when the sealing gasket (30) is in the deformed condition.

4. Bottom bracket (1) according to any one of the previous claims, wherein said sealing gasket (30) comprises a support portion (35) configured to make said sealing gasket (30) fixedly connected to said first adapter (8).

5. Bottom bracket (1) according to claim 4, wherein said sealing gasket (30) comprises an activation surface (38) configured to transmit a deformation pressure to said first (31) and second lip (32); said activation surface (38) connecting said first lip (31) to said support portion (35).

6. Bottom bracket (1) according to claim 5, wherein said activation surface (38) is an outer surface of the sealing gasket (30) arranged on the opposite side with respect to said rolling bearing (6); said activation surface (28) forming an angle (A) comprised between 5° and 90° with respect to a radial reference plane (P).

7. Bottom bracket (1) according to any one of the previous claims, wherein said first lip (31) comprises a substantially rounded outer surface.

8. Bottom bracket (1) according to any one of the previous claims, wherein said second lip (32) comprises a substantially flat radially inner end surface (36).

9. Bottom bracket (1) according to any one of claims 4 to 6, comprising an annular support body (40) to which said support portion (35) of the sealing gasket (30) is constrained; said sealing gasket (30) being made of softer material with respect to said annular support body (40).

10. Bottom bracket (1) according to claim 9, wherein said annular support body (40) is constrained on a radially outer surface (45) of the first adapter (8).

11. Bottom bracket (1) according to any one of the previous claims, wherein said first rolling bearing (6) comprises a first race (14) coupled with said central pin (2) and a second race (15) coupled with a radially inner surface (16) of the first adapter (8).

12. Bottom bracket (1) according to claims 9 and 11, wherein said annular support body (40) is constrained to a radially outer surface (43) of said second race (15).

13. Bottom bracket (1) according to any one of the previous claims, comprising an adjustment nut (21), rotating as a unit with said central pin (2), axially outer with respect to said first rolling bearing (6) and in axial abutment against it; said first lip (31) of the sealing gasket (30) being in sliding contact on said adjustment nut (21).

## Patentansprüche

1. Tretlager (1) für Fahrräder, umfassend:
― einen zentralen Stift (2) mit einer Längsachse (X), die sich entlang einer vorgegebenen Richtung erstreckt und einen ersten axialen Endabschnitt (3) und einen zweiten axialen Endabschnitt (4) umfasst;
― einen ersten Adapter (8), der in Bezug auf den zentralen Stift (2) radial außen liegt und von diesem gekreuzt wird und so konfiguriert ist, dass er mit einem ersten Ende eines Gehäuses (102) zur Unterbringung des Tretlagers in einem Rahmen eines Fahrrads verbunden werden kann;
― ein erstes Wälzlager (6), das radial zwischen dem zentralen Stift (2) und dem ersten Adapter (8) angeordnet ist;
― eine Dichtung (30), die in axial äußerer Position in Bezug auf das erste Wälzlager (6) und in radial äußerer Position in Bezug auf den zentralen Stift (2) angeordnet ist, um das erste Wälzlager (6) flüssigkeitsdicht von der Außenseite zu isolieren, wobei die Dichtung (30) direkt der Außenseite ausgesetzt ist und elastisch zwischen einem unverformten Zustand und einem verformten Zustand verformbar ist;
wobei die Dichtung (30) ein erstes axial äußeres Ende (34) umfasst, das mit einer ersten Lippe (31) versehen ist, und die erste Lippe (31) in ständiger fluiddichter Beziehung zu dem zentralen Stift (2) steht;
und **dadurch gekennzeichnet, dass** die Dichtung (30) eine zweite Lippe (32) umfasst, die in Bezug auf die erste Lippe (31) axial weiter innen liegt, und wenn die Dichtung (30) vom unverformten Zustand in den verformten Zustand übergeht, sich die zweite Lippe (32) von einer radial weiter außen liegenden Position, in der sich die zweite Lippe (32) radial außerhalb der ersten Lippe (31) befindet und in der die zweite Lippe (32) keine Fluiddichtung auf den zentralen Stift (2) ausübt, in eine radial weiter innen liegende Position bewegt, in der die zweite Lippe (32) in fluiddichter Beziehung zu dem zentralen Stift (2) steht.

2. Tretlager (1) nach Anspruch 1, wobei die zweite Lippe (32) auf der gleichen radialen Höhe wie die erste Lippe (31) angeordnet ist, wenn sich die Dichtung (30) im verformten Zustand befindet.

3. Tretlager (1) nach Anspruch 1 oder 2, wobei die Dichtung (30) einen Verbindungsabschnitt (33) zwischen der ersten (31) und der zweiten Lippe (32) umfasst; wobei der Verbindungsabschnitt (33) in Bezug auf die erste (31) und die zweite Lippe (32) radial weiter außen liegt, wenn sich die Dichtung (30) im verformten Zustand befindet.

4. Tretlager (1) nach einem der vorhergehenden Ansprüche, wobei die Dichtung (30) einen Stützabschnitt (35) umfasst, der so konfiguriert ist, dass die Dichtung (30) fest mit dem ersten Adapter (8) verbunden ist.

5. Tretlager (1) nach Anspruch 4, wobei die Dichtung (30) eine Aktivierungsfläche (38) umfasst, die so konfiguriert ist, dass sie einen Verformungsdruck auf die erste (31) und die zweite Lippe (32) überträgt; wobei die Aktivierungsfläche (38) die erste Lippe (31) mit dem Stützabschnitt (35) verbindet.

6. Tretlager (1) nach Anspruch 5, wobei die Aktivierungsfläche (38) eine Außenfläche der Dichtung (30) ist, die auf der gegenüberliegenden Seite in Bezug auf das Wälzlager (6) angeordnet ist; wobei die Aktivierungsfläche (28) einen Winkel (A) zwischen 5° und 90° in Bezug auf eine radiale Bezugsebene (P) bildet.

7. Tretlager (1) nach einem der vorhergehenden Ansprüche, wobei die erste Lippe (31) eine im Wesentlichen abgerundete Außenfläche umfasst.

8. Tretlager (1) nach einem der vorhergehenden Ansprüche, wobei die zweite Lippe (32) eine im Wesentlichen flache, radial innere Endfläche (36) umfasst.

9. Tretlager (1) nach einem der Ansprüche 4 bis 6, umfassend einen ringförmigen Stützkörper (40), an dem der Stützabschnitt (35) der Dichtung (30) befestigt ist; wobei die Dichtung (30) aus einem weicheren Material als der ringförmige Stützkörper (40) hergestellt ist.

10. Tretlager (1) nach Anspruch 9, wobei der ringförmige Stützkörper (40) auf einer radial äußeren Oberfläche (45) des ersten Adapters (8) befestigt ist.

11. Tretlager (1) nach einem der vorhergehenden Ansprüche, wobei das erste Wälzlager (6) einen ersten Laufring (14), der mit dem zentralen Stift (2) gekoppelt ist, und einen zweiten Laufring (15), der mit einer radial inneren Oberfläche (16) des ersten Adapters (8) gekoppelt ist, umfasst.

12. Tretlager (1) nach Anspruch 9 und 11, wobei der ringförmige Stützkörper (40) an einer radial äußeren Oberfläche (43) des zweiten Laufrings (15) befestigt ist.

13. Tretlager (1) nach einem der vorhergehenden Ansprüche, umfassend eine Einstellmutter (21), die sich als Einheit mit dem zentralen Bolzen (2) dreht, axial außerhalb in Bezug auf das erste Wälzlager (6) und in axialer Anlage an diesem; wobei die erste Lippe (31) der Dichtung (30) in Gleitkontakt mit der Einstellmutter (21) steht.

## Revendications

1. Pédalier (1) pour bicyclettes comprenant :
- un axe central (2) qui comporte un axe longitudinal (X) qui est étendu suivant une direction prédéterminée et qui comprend une première partie d'extrémité axiale (3) et une seconde partie d'extrémité axiale (4) ;
- un premier adaptateur (8) qui est radialement externe par rapport audit axe central (2), qui est croisé par celui-ci et qui est configuré pour être associé à une première extrémité d'un boîtier (102) pour loger le pédalier dans un cadre d'une bicyclette ;
- un premier palier à roulements (6) qui est agencé radialement entre ledit axe central (2) et ledit premier adaptateur (8) ; et
- une garniture d'étanchéité (30) qui est agencée selon une position axialement externe par rapport audit premier palier à roulements (6) et radialement externe par rapport audit axe central (2) afin d'isoler ledit premier palier à roulements (6) d'une manière étanche aux fluides vis-à-vis de l'extérieur, ladite garniture d'étanchéité (30) étant directement exposée à l'extérieur et pouvant être déformée élastiquement entre une condition non déformée et une condition déformée ;
dans lequel ladite garniture d'étanchéité (30) comprend une première extrémité axialement externe (34) qui est munie d'une première lèvre (31) et ladite première lèvre (31) étant selon une relation constante d'étanchéité aux fluides par rapport audit axe central (2) ; et
**caractérisé en ce que** :
la garniture d'étanchéité (30) comprend une seconde lèvre (32) qui est axialement davantage interne par rapport à la première lèvre (31) et lorsque la garniture d'étanchéité (30) passe de la condition non déformée à la condition déformée, ladite seconde lèvre (32) est déplacée depuis une position davantage radiale externe dans laquelle la seconde lèvre (32) est radialement à l'extérieur de la première lèvre (31) et dans laquelle la seconde lèvre (32) n'exerce pas un effet d'étanchéité vis-à-vis des fluides sur ledit axe central (2) jusqu'à une position davantage radiale interne dans laquelle la seconde lèvre (32) est selon une relation d'étanchéité aux fluides par rapport audit axe central (2).

2. Pédalier (1) selon la revendication 1, dans lequel ladite seconde lèvre (32) est agencée à la même hauteur radiale que la première lèvre (31) lorsque la garniture d'étanchéité (30) est dans la condition déformée.

3. Pédalier (1) selon la revendication 1 ou 2, dans lequel ladite garniture d'étanchéité (30) comprend une partie de jonction (33) entre lesdites première (31) et seconde (32) lèvres ; ladite partie de jonction (33) étant radialement davantage externe par rapport aux première (31) et seconde (32) lèvres lorsque la garniture d'étanchéité (30) est dans la condition déformée.

4. Pédalier (1) selon l'une quelconque des revendications précédentes, dans lequel ladite garniture d'étanchéité (30) comprend une partie de support (35) qui est configurée pour faire en sorte que ladite garniture d'étanchéité (30) soit connectée de façon fixe audit premier adaptateur (8).

5. Pédalier (1) selon la revendication 4, dans lequel ladite garniture d'étanchéité (30) comprend une surface d'activation (38) qui est configurée pour transmettre une pression de déformation auxdites première (31) et seconde (32) lèvres ; ladite surface d'activation (38) connectant ladite première lèvre (31) à ladite partie de support (35).

6. Pédalier (1) selon la revendication 5, dans lequel ladite surface d'activation (38) est une surface externe de la garniture d'étanchéité (30) qui est agencée sur le côté opposé par rapport audit palier à roulements (6) ; ladite surface d'activation (38) formant un angle (A) qui est compris entre 5° et 90° par rapport à un plan de référence radial (P).

7. Pédalier (1) selon l'une quelconque des revendications précédentes, dans lequel la première lèvre (31) comprend une surface externe sensiblement arrondie.

8. Pédalier (1) selon l'une quelconque des revendications précédentes, dans lequel ladite seconde lèvre (32) comprend une surface d'extrémité radialement interne sensiblement plane (36).

9. Pédalier (1) selon l'une quelconque des revendications 4 à 6, comprenant un corps de support annulaire (40) par rapport auquel ladite partie de support (35) de la garniture d'étanchéité (30) est contrainte ; ladite garniture d'étanchéité (30) étant réalisée en un matériau davantage mou par rapport audit corps de support annulaire (40).

10. Pédalier (1) selon la revendication 9, dans lequel ledit corps de support annulaire (40) est contraint sur une surface radialement externe (45) du premier adaptateur (8).

11. Pédalier (1) selon l'une quelconque des revendications précédentes, dans lequel ledit premier palier à roulements (6) comprend un premier chemin de roulement (14) qui est couplé audit axe central (2) et un second chemin de roulement (15) qui est couplé à une surface radialement interne (16) du premier adaptateur (8).

12. Pédalier (1) selon les revendications 9 et 11, dans lequel ledit corps de support annulaire (40) est contraint par rapport à une surface radialement externe (43) dudit second chemin de roulement (15).

13. Pédalier (1) selon l'une quelconque des revendications précédentes, comprenant un écrou de réglage (21) qui est entraîné en rotation en tant qu'unité avec ledit axe central (2), qui est axialement externe par rapport audit premier palier à roulements (6) et qui vient en butée axiale contre celui-ci ; ladite première lèvre (31) de la garniture d'étanchéité (30) étant selon un contact coulissant sur ledit écrou de réglage (21).
